(19) Europäisches Patentamt
European Patent Office
Office européen des brevets

(11) **EP 1 917 128 B1**

(12) **EUROPÄISCHE PATENTSCHRIFT**

(45) Veröffentlichungstag und Bekanntmachung des Hinweises auf die Patenterteilung:
**18.01.2012 Patentblatt 2012/03**

(21) Anmeldenummer: 06791670.0

(22) Anmeldetag: **25.08.2006**

(51) Int Cl.:
*B29B 9/16* (2006.01)          *B29B 9/06* (2006.01)
*C08G 63/00* (2006.01)          *C08G 63/90* (2006.01)

(86) Internationale Anmeldenummer:
**PCT/EP2006/008361**

(87) Internationale Veröffentlichungsnummer:
**WO 2007/022994 (01.03.2007 Gazette 2007/09)**

(54) **VERFAHREN UND VORRICHTUNG ZUR VERRINGERUNG DES ACETALDEHYDGEHALTES VON POLYESTERGRANULAT**

METHOD AND DEVICE FOR REDUCING ACETALDEHYDE CONTENT IN POLYESTER GRANULATE

PROCEDE ET DISPOSITIF POUR REDUIRE LA TENEUR EN ACETALDEHYDE D'UN GRANULAT DE POLYESTER

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.08.2005 DE 102005040668**
            **12.06.2006 DE 102006027176**

(43) Veröffentlichungstag der Anmeldung:
**07.05.2008 Patentblatt 2008/19**

(73) Patentinhaber: **Lurgi Zimmer GmbH**
**60295 Frankfurt am Main (DE)**

(72) Erfinder:
• **OTTO, Brigitta**
**14715 Milow (DE)**
• **SCHÄFER, Roland**
**64291 Darmstadt (DE)**
• **BACHMANN, Holger**
**64331 Weiterstadt (DE)**
• **LINKE, Rainer**
**35510 Butzbach (DE)**

(74) Vertreter: **Meyer-Dulheuer, Karl-Hermann et al**
**Dr. Meyer- Dulheuer & Partner**
**Patentanwaltskanzlei**
**Mainzer-Landstrasse 69-71**
**60329 Frankfurt am Main (DE)**

(56) Entgegenhaltungen:
DE-A1- 4 223 197      US-A- 4 223 128
US-A- 4 230 819      US-A1- 2005 085 620

**Beschreibung**

Die Erfindung betrifft ein Verfahren und eine Vorrichtung zur Verringerung des Acetaldehydgehaltes von Polyestergranulat, das vorzugsweise zum Herstellen von Polyesterformkörpem verwendet wird.

**Stand der Technik**

Die bekannten aromatischen Polyester oder Copolyester, insbesondere Polyethylenterephthalat und dessen Copolymere mit geringen Anteilen von beispielsweise Isophthalsäure oder Cyclohexandimethanol, Polybutylenterephthalat, Polytrimethylenterephthalat, Polyethylennaphthalat und deren Copolyestern, die als Ausgangsmaterial für Fasern, Filme, Folien und Verpackungen dienen, werden nach einer Schmelzepolykondensation zu Granulaten mittlerer Viskosität verarbeitet. Der mittlere Polykondensationsgrad, ausgedrückt in der Intrinsischen Viskosität (I.V.), bewegt sich bei Polyethylenterephthalat und seinen entsprechend niedrig modifizierten Copolyestern nach der Schmelzepolykondensation im Bereich zwischen 0,30 - 0,90 dl/g.

Die Ausdrücke "Granulat" und "Chip" sollen im Folgenden die gleiche Bedeutung haben und werden daher synonym verwendet.

Da die Herstellung von Granulaten mit einer I.V. über 0.65 dl/g, insbesondere in konventionellen Autoklaven, kaum möglich ist und hohe Viskositäten > 0.80 dl/g spezielle Reaktoren erfordern und außerdem die Polyester für Lebensmittelverpackungen einen sehr niedrigen Acetaldehydgehalt erfordern, wurde früher nach dem Stand der Technik der Schmelzpolykondensation eine Festphasenpolykondensation (SSP) nachgeschaltet, die zu einer Erhöhung der I.V. im allgemeinen um 0.05 - 0,4 dl/g und zu einer Absenkung des Acetaldehydgehaltes von etwa 25 - 100 ppm auf Werte < 1 ppm im PET (Polyethylenterephthalat) führt.

In dieser sich an die Schmelzepolykondensationsstufe anschließenden Festphasenpolykondensation wird somit die mittlere Viskosität derart angehoben, dass die für das entsprechende Verwendungsgebiet notwendigen Festigkeiten erreicht werden, der Acetaldehydgehalt bei Lebensmittelverpackungen entsprechend den Anforderungen abgesenkt und der austretende Oligomerenanteil auf ein Mindestmaß reduziert wird. Dabei ist es wichtig, dass außerdem der als Vinylester gebundene Acetaldehyd, auch als Depot-Acetaldehyd bezeichnet, soweit abgebaut wird, dass bei der Verarbeitung des Polyestergranulats zu Verpackungen, insbesondere zu Polyesterflaschen nach dem Streckblas- und Spritzstreckblasverfahren, im Polyester nur eine minimale Acetaldehydmenge nachgebildet wird. Speziell für die Abfüllung von Mineralwasser in Polyesterflaschen sollten in der Flaschenwand aus Polyethylenterephthalat weniger als 2 ppm Acetaldehyd, bevorzugt sogar weniger als 1 ppm Acetaldehyd enthalten sein.

Neben der SSP sind Verfahren zur Entaldehydisierung von Polyethylenterephthalat durch Behandlung mit Stickstoff oder mit trockener Luft, wie im US-Patent 4,230,819 beschrieben, bekannt. Um den geforderten niedrigen Acetaldehydgehalt im Material zu erhalten, werden Temperaturen bis etwa 230 °C verwendet, während bei niedrigeren Temperaturen zwischen 170 und 200°C unbefriedigend hohe Acetaldehydgehalte im Granulat verbleiben. Bei Verwendung von Luft ist bei derart hohen Temperaturen mit einem starken thermooxidativen Abbau des Polyesters zu rechnen. Beim Einsatz von Stickstoff erhöhen sich die Kosten für das Gas und die aufwendige Reinigung.

Im US-Patent 4,223,128 werden Temperaturen oberhalb 220 °C bei Einsatz von Luft als Trägergas ausgeschlossen. Die gewünschte Erhöhung der I.V. wird mit Hilfe großer Mengen trockener Luft mit einem Taupunkt von -40 bis - 80 °C beschrieben. Bei der in den Beispielen dieses Patentes aufgeführten Behandlungstemperatur von 200 °C ist bei kontinuierlichen Verfahren, die ein mehr oder weniger breites Verweilzeitspektrum aufweisen, die oxidative Schädigung einzelner Granulatkörner nicht auszuschließen.

In der SSP wird eine Kettenverlängerung der Polyester in fester Phase, um die in einer Schmelze stärker auftretenden Nebenreaktionen möglichst gering zu halten, und eine Entfernung der schädlichen Nebenprodukte erreicht. Mit dieser Kettenverlängerung, die sich in einer Erhöhung der I.V. ausdrückt, können Produkte, wie Flaschen oder Reifencord, die eine höhere Festigkeit erfordern, hergestellt werden. Da Polyester jedoch teilkristalline Thermoplaste sind, weisen sie je nach Art einen mehr oder weniger großen amorphen Anteil auf. Diese Tatsache bereitet bei der Durchführung der SSP Schwierigkeiten, da die amorphen Anteile bei den für die SSP notwendigen Temperaturen zu Verklebungen führen, die bis zum Stillstand der Produktionsanlage führen können.

Daher ist es außerdem bekannt, als Vorstufe zur SSP eine Kristallisation der teilkristallinen Chips aus der Schmelzepolykondensation zur Vermeidung der Klebeneigung unter Stickstoff- oder Luftatmosphäre, bei Temperaturen zwischen 160-210 °C durchzuführen, wie in den US-Patenten 4,064,112, 4,161, 578 und 4,370,302 beschrieben.

In der WO 94/17122 wird eine 2-stufige Kristallisation mit Vorheizung und Zwischenkühlung vor der SSP zur Vermeidung von Verklebungen offenbart. Die beschriebene SSP-Temperatur liegt bei Temperaturen zwischen 205 und 230 °C.

Zur Verbesserung der Qualität der Chips kann, wie in JP 09249744 oder US 5,663,290 beschrieben, mit feuchtem Inertgas vor oder während der SSP gearbeitet werden oder, wie in dem US-Patent 5,573,820 offenbart, können die Chips vorher mit heißem Wasser oder direkt mit Wasserdampf intensiv bei Temperaturen bis zu 200 °C vor der Kristallisation behandelt werden. In diesem Fall ist aber bereits bei den üblichen Temperaturen von > 190 °C mit einem starken unerwünschten Abfall der I.V. durch Hydrolyse im PET zu rechnen.

Ein weiteres Verfahren ist die Behandlung der zu kristallisierenden Chips mit gereinigtem ungetrockneten Stickstoff aus der SSP im Gegenstrom in einer 2. Kristallisationsstufe, wie in EP 222 714 dargelegt. Der dort beschriebene Effekt zur Reduzierung des Acetaldehydgehaltes wird eher als geringfügig bewertet.

Verarbeiter dieses Granulates sind vor allem Hersteller von Hohlkörpern. Häufig werden in nach dem Spritzgussverfahren arbeitenden Preformmaschinen Vorformlinge, so genannte Preforms, hergestellt, aus denen wiederum in einem weiteren Schritt Polyesterflaschen in einem Blasformverfahren produziert werden. Auch andere Formgebungen für Polyestergranulat, beispielsweise in Maschinen zur Film- und Folienherstellung sind möglich.

Inzwischen wurden auch Verfahren zur Herstellung eines Polyesters mit der gewünschten Viskosität unter Vermeidung einer SSP entwickelt. So wird beispielsweise in der DE 195 03 053 ein Verfahren beschrieben, in dem die aus dem Polykondensationsreaktor austretende Schmelze in einer mit statischen Mischelementen versehenen Strecke mit einem Inertgas und einer AA-reduzierenden schwerflüchtigen Amidverbindung versetzt wird und unter Vakuumentgasung in kürzestmöglicher Zeit und unter geringstmöglicher Scherung der Schmelze einer Formgebungsvorrichtung zur Herstellung von Preforms zugeführt wird.

In der DE 195 05 680 wird der Polykondensationsschmeize mit einer IV = 0,5-0,75 dl/g ein Inertgas zugesetzt, die Schmelze in einem Nachkondensationsreaktor unter Vakuum bis zu einer Viskosität von 0,75-0,95 dl/g polykondensiert und die Schmelze danach sofort in ein Spritzgusswerkzeug geleitet.

Die EP 0 842 210 nennt eine andere Möglichkeit zur Umgehung der SSP. Dort wird die Schmelzepolykondensation bis zu einer Viskosität von 0,65-0,85 dl/g durchgeführt, der Polyester gekühlt und granuliert, wieder aufgeschmolzen und danach unter Bildung einer großen Oberfläche in einer geeigneten Vorrichtung durch Spülen mit einem geeigneten Spülmittel von flüchtigen Substanzen wie AA befreit.

Wird die Polyesterschmelze nicht direkt von einer Formgebungseinheit abgenommen, so wird sie im Allgemeinen granuliert, um ein lager- und transportfähiges Zwischenprodukt zu erhalten.

Für die Granulierung von Kunststoffen ist zum Beispiel das Verfahren der Stranggranulation in den Markt eingeführt. Dieses Verfahren zeichnet sich dadurch aus, dass in kontinuierlicher Betriebsweise relativ lange Kunststoffstränge durch eine Lochplatte gepresst und anschließend frei hängend nach einer kurzen Transportstrecke durch Luft durch ein Wasserbad hindurchgeleitet werden. Wegen der geringen Oberfläche eines Kunststoffstranges im Vergleich zum Granulat kann hierbei eine Wasseraufnahme in engen Grenzen gehalten werden. Die abgekühlten Stränge werden getrocknet und einem Granulator zugeführt Bei diesem Verfahren erfolgt die Granulierung im festen Zustand. Im Anschluss daran findet üblicherweise eine nochmalige Trocknung statt, beschrieben beispielsweise in DE 43 14 162 oder im Kunststoffhandbuch. Bei Nutzung dieses Granulierverfahrens ist die Möglichkeit einer starken punktuellen Temperaturerhöhung im Strang und somit erhöhter Abbauerscheinungen im Polymer und ungleichmäßigen Kristallisationsgrade von Chip zu Chip sehr groß. Bei dieser Technologie findet die Abkühlung im Chip von außen nach innen statt.

Eine weitere Möglichkeit der Granulierung von Polymerschmelze nach der Polykondensation ist heute vor allem die Unterwassergranulation, bei der die Schmelze direkt nach Austritt aus Düsen/Lochplatten des Granulators in einer anschließenden Wasserkammer mit Schneidmessern abgetrennt wird. Die abgetrennten Granulate sind noch plastisch und verformen sich durch die Oberflächenspannung beim Abschrecken im kalten Wasser, wobei die Abkühlung ebenfalls von außen nach innen stattfindet und nehmen eine annähernd runde bis linsenförmige Kontur an. Die abgekühlten Granulate werden mit dem Wasserstrom in einem Wasserabscheider von diesem getrennt und getrocknet und dann in Big Bags verpackt oder in Silos zur Weiterverarbeitung gefördert (DE 35 41 500, DE 199 14 116, EP 0 432 427, DE 37 02 841). Die auf diese Weise hergestellten Chips weisen einen gleichmäßigen Kristallisationsgrad unter 10 % auf.

In US 4,436,782 wird wiederum ein Verfahren zur Granulierung und Weiterbehandlung von PET zu Pellets beschrieben, in dem bei Temperaturen zwischen 260 °C und 280 °C ein Oligomerengemisch der Viskosität von 0,08 - 0,15 durch Düsen gepresst wird, so dass Tropfen entstehen, die durch einen Kühlbereich mit Inertgasatmosphäre in ein Wasserbad oder auf ein Transportband fallen und die Tropfen zu amorphen Pellets erstarren. Auch in diesem Verfahren entstehen Pellets mit einem hohen Anteil amorpher Strukturen.

Bei allen beschriebenen Verfahren werden Granulate mit niedrigem Kristallisationsgrad, üblicherweise unterhalb 12 %, erhalten. Um die Kristallinität der polymeren Granulate zum Beispiel als Vorstufe zur SSP zu erhöhen, sind bekanntermaßen kostenintensive Reaktionsstufen notwendig. Hohe Betriebskosten entstehen unter anderem dadurch, daß die mit Umgebungstemperatur ankommenden Granulate zuerst auf die Kristallisationstemperatur aufgeheizt werden müssen.

In WO 01/81450 wird ein Verfahren und Vorrichtung zur Vertropfung von Vorprodukten thermoplastischer Polyester und Copolyester beschrieben, der den Nachteil der oben beschriebenen Granulierverfahren die Kristallinität betreffend überwindet, eine Verfahrensverkürzung herkömmlicher Granulierverfahren beschreibt und auf bisher bekannten Verfahrensschritten und Vorrichtungen aufbaut, um oberflächenkristallisierte, vertropfte Vorprodukte in Form von Monomeren, Oligomeren, Monomer-Glykolgemischen oder von teilweise polykondensierten Materialien herzustellen. Dazu wird das Produkt in ein gasförmiges Medium eingebracht, wobei das gasförmige Medium nach dem Eintritt des vertropften Vorproduktes in das gasförmige Medium den Kristallisationsvorgang des Vorproduktes beschleunigt und den Kristallisationszustand beschleunigt herbeiführt, indem es das vertropfte Vorprodukt auf einer Temperatur > 100 °C und unter seinem Schmelzpunkt für einen begrenzten Zeitraum hält, bis eine ausreichende Kristallisation in der Oberfläche des Tropfens abgeschlossen ist. Auch hier liegt also eine stärker kristallisierte Außenschicht vor. Damit wird eine nicht klebende Oberfläche erhalten, die eine unmittelbare Weiterbehandlung zu hochpolymerem Polykondensat verspricht. Ein derart hergestelltes Material hält den notwendigen mechanischen Belastungen nur bedingt stand. Die Sprödigkeit gegenüber einem amorphen Chip nimmt zu. Ein weiterer Nachteil dieser Kristallinitätserzeugung im niedrigmolekularen Bereich ist ein nach der abgeschlossenen SSP vollkommen durchkristallisierter Chip mit starr ausgerichteten Kristallstrukturen, zu deren Zerstörung während des Aufschmelzvorganges bei der Herstellung beispielsweise von Preforms im Spritzgießverfahren ungleich höhere Energie aufgewendet werden muss. Durch die notwendige hohe Aufschmelztemperatur von etwa 300 °C steigt die Acetaldehydreformation in den Preforms stark an und die Qualität verschlechtert sich, vor allem auch durch verstärkte Abbaureaktionen. Außerdem besteht die Gefahr, dass der Ablauf der SSP durch die Unbeweglichkeit der Kettenenden beim Ansteigen der Viskosität behindert oder sogar gestoppt wird.

Ein weiteres Granulierverfahren zur Herstellung von kristallisierten Chips während des Granulationsprozesses wird in WO 01/05566 beschrieben. Schmelzeflüssige, aus Düsen austretende Kunststoffstränge werden unmittelbar in einem temperierten flüssigen Medium auf einer Kristallisationsstrecke teilkristallisiert, wobei in diesem flüssigen Medium Temperaturen über der Glasübergangstemperatur der Kunststoffstränge gehalten werden. Im Anschluss an die Kristallisationsstrecke folgt die Granuliervorrichtung. Durch die Kristallisation im Mantel des Kunststoffes ist eine ausreichende Festigkeit vorhanden, um anschließend nach kurzer Temperierungsstrecke in der Granulieranlage ohne vorherige Trocknung die Kunststoffstränge zu Pellets zu zerteilen. Auch hier liegt also eine stärker kristallisierte Außenschicht vor. Nachteilig ist, dass nach der Granulierung der Kunststoffe ein Gemisch aus Granulat und flüssigem Medium vorliegt, und somit eine Trocknung der Granulate mit bekannten Mitteln vorgenommen werden muss.

In der deutschen Patentanmeldung DE 103 49 016 A1 sowie in der WO 2005/044901 A1 wird beschrieben, dass direkt nach einer Unterwassergranulation die gerade hergestellten Pellets sehr schnell vom Wasser befreit werden und unter Nutzung der Eigenwärme trocknen und kristallisieren. Um ein Verkleben der Chips zu vermeiden, werden die Pellets unmittelbar nach dem Abschleudern des Wassers über einen Vibrations- oder Schwingförderer nach einer ausreichenden Verweildauer zu einer nachgeschalteten Abfüllanlage oder einer Weiterverarbeitungsanlage gefördert. Mit dieser Technologie erfolgt der Kristallisationsvorgang von innen nach außen im Pellet unter Ausnutzung der Eigenwärme, womit eine gleichmäßigere Kristallisation über den Durchmesser des Granulates erreicht wird.

Die mittels diesem Verfahren hergestellten Chips können gemäß der DE 102004015515 A1 in einer herkömmlichen Anlage zur Festphasendealdehydisierung weiterbehandelt werden, um den Acetaldehydgehalt auf einen gewünschten Wert zu verringern. Die nach der Kristallisation noch 140°C warmen Chips müssen dabei zur Festphasendealdehydisierung auf 210°C aufgeheizt werden. Auf diese Weise lässt sich der Acetaldehydgehalt im Chip beispielsweise von 43 ppm auf 0,9 ppm verringern.

## Nachteile bisheriger DAH-Verfahren

Die bekannten Verfahren zur Festphasendealdehydisierung haben mehrere Nachteile. Zum einen sind mehrere Behandlungsapparate erforderlich, nämlich mindestens ein Granulator, ein Kristallisator, der gegebenenfalls zweistufig ausgeführt sein kann, sowie ein Reaktor, in dem die Festphasendealdehydisierung ausgeführt wird. Zusätzlich werden Einrichtungen zum Weitertransport der Chips zwischen den einzelnen Stufen sowie Temperierungseinrichtungen zur Einstellung der für den jeweiligen Verfahrensschritt erforderlichen Temperaturen in den Chips benötigt. Das mehrfache Abkühlen und Aufheizen bedingt außerdem einen hohen Energieverbrauch der Anlage.

Ein weiterer, erheblicher Nachteil der herkömmlichen Verfahren besteht darin, dass als Behandlungsgas teurer, gegebenenfalls gereinigter, Stickstoff erforderlich ist. Dies ist erforderlich, weil zum Aufheizen der Chips das Behandlungsgas mit einer Temperatur, die höher als die eigentlich notwendige Granulat-Temperatur bei der Dealdehydisierung ist, zugeführt wird, um einen Wärmeübergang vom Gas auf die Chips zu erreichen. Würde in diesem Fall Luft als Behandlungsgas eingesetzt, würden durch die hohen Temperaturen oxidative Schädigungen auftreten und ein zu hoher Acetaldehydgehalt oder eine zu hohe Acetaldehydreformation (d. h. Nachbildung von Acetaldehyd) wären die Folge.

## Aufgabe der vorliegenden Erfindung

Der vorliegenden Erfindung liegt daher die Aufgabe zugrunde, ein Verfahren zur Verfügung zu stellen, das apparativ vereinfacht sowie mit geringen Betriebskosten zu betreiben ist und mit dem gleichzeitig die besonders hohen Qualitätsansprüche an den Polyester für Verpackungen bezüglich Viskosität, Farbe, Acetaldehydgehalt, Acetaldehydreformation sowie Aufschmelz verhalten beibehalten oder sogar verbessert werden. Die genannten Nachteile des Standes der Technik sollen damit vermieden werden. Außerdem soll der Zusatz von Acetaldehyd-reduzierenden Substanzen, den sogenannten "Acetaldehyd-Scavengern" vermieden werden. Zusätzlich soll die Möglichkeit geschaffen werden, die intrinsische Viskosität (I.V.) in geringem Maße auch nach der Granulation zu beeinflussen, um beispielsweise kleine Mengen eines Granulates für Sonderprodukte herstellen zu können, ohne in die Betriebsbedingungen des üblicherweise sehr großen letzten Schmelzepolykondensationsreaktors vor dem Granulator eingreifen zu müssen.

Eine zusätzliche Aufgabe der Erfindung ist es, eine Vorrichtung zur Durchführung des erfindungsgemäßen Verfahrens zur Verfügung zu stellen.

Eine weitere Aufgabe der Erfindung ist es, ein Polyestergranulat mit verbesserten Verarbeitungseigenschaften zur Verfügung zu stellen.

**Kurze Beschreibung der Erfindung**

Die vorliegende Erfindung stellt ein Verfahren gemäß Anspruch 1 zur Verfügung. Bevorzugte Ausführungsformen dieses Verfahrens sind in den Unteransprüchen 2 bis 8 angegeben, sowie in der nachfolgenden Beschreibung. Weiterhin stellt die vorliegende Erfindung eine Vorrichtung gemäß Anspruch 9 zur Verfügung. Bevorzugte Ausführungsformen sind in den Unteransprüchen 10 bis 12 angegeben, sowie in der nachfolgenden Beschreibung. Weiterhin stellt die vorliegende Erfindung ein Polyestergranulat wie in Ansprüchen 13 und 14 definiert zur Verfügung. Bevorzugte Ausführungsformen ergeben sich wiederum aus den Unteransprüchen 15 und 16 sowie der nachfolgenden Beschreibung.

**Kurze Beschreibung der Figur**

Die Figur 1 stellt schematisch eine Vorrichtung in Übereinstimmung mit der vorliegenden Erfindung dar. Diese ist in der nachfolgenden Beschreibung detailliert beschrieben.

Figur 2 offenbart die Acetaldehydgehalte von Preforms, erhalten mit einem 72-Kavitätenwerkzeug.

**Detaillierte Beschreibung der Erfindung**

Die vorliegende Erfindung stellt ein Verfahren zur Herstellung eines Granulates mit geringem Acetaldehydgehalt aus einer hochviskosen Polyesterschmelze mit einer I.V. zwischen 0,60 und 1,0 dl/g zur Verfügung, wobei

a) der Polyesterschmelzestrang unter Wasser bei einer Temperatur von mindestens 90 °C zerteilt wird,

b) das begleitende Wasser unter möglichst geringer Abkühlung des Granulates vom Granulat getrennt, bevorzugt abgeschleudert, wird, sodass das Granulat nach Abtrennung des Wassers eine Temperatur von mindestens 130 °C aufweist,

c) das so erhaltene wasserarme Granulat nach der Wasserabtrennung in einen Dealdehydisierungsbehälter gegeben wird,

d) das Granulat im Dealdehydisierungsbehälter mittels eines Spülluftstroms mit einer Eintrittstemperatur zwischen 180 °C und 200 °C behandelt wird, wobei die Verweilzeit des Granulats im Dealdehydisierungteil des Behälters 3 bis 20 Stunden beträgt; und wobei das Granulat im Schritt c) entweder direkt in den Dealdehydisierungsbehälter gegeben wird, oder mittels einer Dosiereinrichtung, bevorzugt eine Zellenradschleuse, in den Dealdehydisierungsbehälter gegeben wird.

Bevorzugt erfolgt die Abtrennung des Wassers vom Granulat im Schritt b) des Verfahrens in Übereinstimmung mit der vorliegenden Erfindung durch Abschleudern, wozu insbesondere Zentrifugen geeignet sind. Weiterhin ist es erfindungsgemäß bevorzugt, wenn das Granulat, das in den Dealdehydisierungsbehälter gegeben wird, eine Granulattemperatur von 170 bis 195 °C aufweist. Wesentlich im Zusammenhang mit dem Verfahren der vorliegenden Erfindung ist in diesem Zusammenhang, dass zwischen der Wasserabtrennung und der Einbringung in den Dealdehydisierungsbehälter kein Kristallisationsschritt, wie er im Stand der Technik als wesentlich angesehen wird, durchgeführt werden braucht.

Bei dem Polyester handelt es sich vorzugsweise um Polyethylenterephthalat und dessen Copolymere mit geringen Anteilen von Comonomeren wie beispielsweise Isophthalsäure, Diethylenglykol oder Cyclohexandimethanol (CHDM). Bevorzugt enthält das erfindungsgemäß hergestellte Granulat jedoch kein CHDM, da CHDM-haltiger Polyester schlechtere Barriereeigenschaften beispielsweise für Kohlendioxid aufweist und Flaschen aus solchem Material für kohlesäurehaltige Getränke weniger geeignet sind. CHDM-haltiges Polyestergranulat neigt auch eher zu Verklebungen.

Die Polyesterschmelze und damit auch das erfindungsgemäß hergestellte Granulat enthält keine Acetaldehydreduzierenden Substanzen.

In einer bevorzugten Ausführungsform kann im erfindungsgemäßen Verfahren die Spülluft einen Taupunkt Tp von kleiner als 30°C, bevorzugt kleiner als -15°C und besonders bevorzugt kleiner als -20°C aufweisen. Die Trocknung der Spülluft auf Taupunkte von -80°C oder noch niedrigere Werte ist sowohl technisch als auch wirtschaftlich nicht mehr sinnvoll.

In einer bevorzugten Ausführungsform sollten die Eintrittstemperatur des Spülgases und die Eintrittstemperatur des Granulates beim Eintritt in den DAH-Behälter eine möglichst geringe Differenz haben. Die Differenz ($T_{S,E}$ - $T_{G,E}$) zwischen Granulateintrittstemperatur $T_{G,E}$ und Eintrittstemperatur $T_{S,E}$ der Spülluft sollte zwischen -10 und + 40 K, bevorzugt zwischen 0 und 30 K betragen.

In einer bevorzugten Ausführungsform soll im erfindungsgemäßen Verfahren die Differenz zwischen der intrinsischen Viskosität (I.V.) des Polyesters zwischen dem Eintritt in die Zerteilungseinrichtung in Schritt a. und dem Austritt aus dem Dealdehydisierungsbehälter in Schritt d. maximal $\pm$ 0,10 dl/g betragen.

In einer bevorzugten Ausführungsform soll im erfindungsgemäßen Verfahren die Luft vor der Einleitung in den Dealdehydisierungsbehälter mittels Molekularsieb oder anderer Absorbentien getrocknet werden.

Die Lösung der zusätzlichen Aufgabe ist eine Vorrichtung zur Herstellung eines Granulates mit geringem Acetaldehydgehalt aus einer hochviskosen Polyesterschmelze, bestehend aus

a) einem Unterwassergranulator,

b) einer Zentrifuge

c) einem Dealdehydisierungsbehälter, der an der Oberseite mindestens eine Granulateinlassöffnung und mindestens eine Spülgasauslassöffnung und an der Unterseite eine Granulatauslassöffnung sowie an der Unter- und/ oder Oberseite mindestens eine Spülgaseinlassöffnung aufweist,

wobei der Granulatauslass der Zentrifuge mit dem Granulateinlass des Dealdehydisierungsbehälters entweder nur durch eine passive Leitungseinrichtung oder durch eine passive Leitungseinrichtung in Kombination mit einer Dosiereinrichtung verbunden ist.

Der Begriff "Dosiereinrichtung" soll auch alle dem Fachmann als "Zuteileinrichtung" bekannten Einrichtungen umfassen. In einer bevorzugten Ausführungsform kann in der erfindungsgemäßen Vorrichtung die Dosiereinrichtung eine Zellenradschleuse sein.

In einer bevorzugten Ausführungsform kann in der erfindungsgemäßen Vorrichtung der Dealdehydisierungsbehälter Einbauten enthalten.

In einer bevorzugten Ausführungsform kann in der erfindungsgemäßen Vorrichtung der Dealdehydisierungsbehälter ein Rührorgan enthalten.

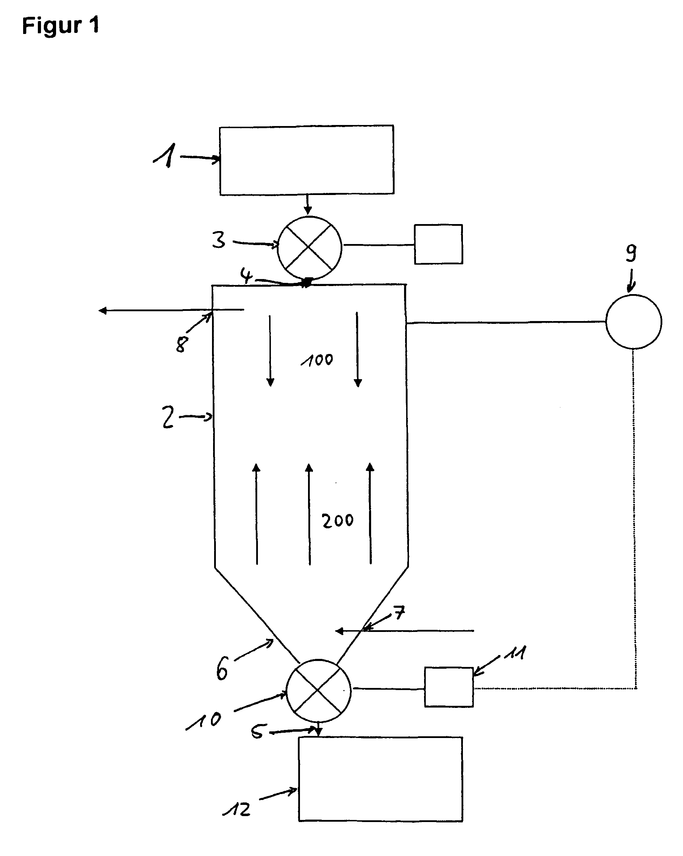

Im Folgenden wird die Erfindung detailliert beschrieben. Zur Erläuterung dient die Figur 1.

Eine hochviskose Polyesterschmelze mit der gewünschten I.V. kann in einer an sich bekannten Polykondensationsanlage hergestellt werden. Als Endreaktor wird dabei ein Polykondensationsreaktor für die Herstellung von hohen intrinsischen Viskositäten ("HVSR") eingesetzt, wie er beispielsweise in EP 0320586 beschrieben ist. Dieser enthält Abstreifelemente zur ständigen Abreinigung von Schmelze, die an den Rührelementen haftet. Ebenso ist auch ein sogenannter "Double-Drive"-Reaktor (Hersteller: Zimmer AG), der beispielsweise in US 3,617,225 beschrieben ist, als Endreaktor geeignet. Dieser enthält statt einer durchgehenden Welle eine geteilte Welle, auf der die Rührelemente sitzen. Die beiden Halbwellen werden jeweils durch eigene Antriebe bewegt. Dadurch ist eine Anpassung der Drehzahl an die Reaktionsbedingungen, insbesondere an die Viskosität der Polymerschmelze, uneingeschränkt möglich. Auch jeder andere Polykondensationsreaktor, der die Erzeugung der gewünschten Intrinsischen Viskositäten erlaubt, ist einsetzbar.

Die Polyesterschmelze mit der gewünschten I.V. wird aus dem Endreaktor über entsprechende Schmelzeleitungen direkt einer Unterwasser-Granuliereinrichtung 1 zugeführt, in der der Schmelzestrang unter möglichst geringer Abkühlung geschnitten wird. Die Temperatur des Schmelzestrangs beim Eintritt in den Granulator 1 sollte bei PET zwischen 270 und 290°C, bevorzugt 280 - 285°C, betragen. Durch die UnterwasserGranulierung entsteht hierbei ein kugelförmiges Granulat. Hierfür geeignete Granulatoren sind beispielsweise von den Herstellern BKG, Gala Industries und Rieter erhältlich.

Bei der Unterwassergranulierung in Übereinstimmung mit der vorliegenden Erfindung, weist das Wasser vorzugsweise eine Temperatur von mindestens 90 °C auf, bevorzugt mehr als 90 °C bis 98 °C, insbesondere bevorzugt 95 °C bis 98 °C. Die Unterwassergranulierung wurde ohne zusätzliche Aufbringung eines Drucks durchgeführt, da in Übereinstimmung mit der vorliegenden Erfindung eine Unterwassergranulierung bei Wassertemperaturen von unterhalb des Siedepunkts durchgeführt wird.

Um, wie nachfolgend beschrieben, eine übermäßige Abkühlung des Polyestermaterials in diesem Verfahrensschritt zu vermeiden, ist die Verweilzeit des Polyestermaterials in der Unterwassergranulierung bevorzugt so kurz wie möglich, beispielsweise 30 Sekunden oder weniger, stärker bevorzugt 15 Sekunden oder weniger, weiter bevorzugt 5 Sekunden oder weniger, und insbesondere von 1 bis 0,1 Sekunden.

Das Granulat wird durch den Wasserstrom zu einer Vorrichtung geführt, in der Wasser und Granulat möglichst weitgehend voneinander getrennt werden, wobei die Kontaktzeit zwischen Wasser und Granulat minimiert werden muss. Besonders gut ist hierfür eine Zentrifuge geeignet. Die Auswahl geeigneter Zentrifugen ist dem Fachmann bei Kenntnis der vorliegenden Erfindung ohne weiteres möglich.

Wesentlich für die Durchführbarkeit der vorliegenden Erfindung ist, dass die bis hierhin beschriebenen Vorrichtungen und Verfahrensschritte so ausgeführt werden, dass das aus der Zentrifuge austretende Granulat eine Temperatur von mindestens 130°C, bevorzugt mehr als 140°C und besonders bevorzugt mindestens 170°C aufweist. Die Abkühlung ist daher möglichst gering zu halten. Dies wird vor allem durch Verwendung von heißem Wasser im Unterwassergranulator erreicht. Um den Polyester nicht zu sehr abzukühlen, sollte die Wassertemperatur mindestens 90°C, bevorzugt > 95°C betragen. Um Verdunstungsverluste zu begrenzen, sollte eine Wassertemperatur von 98°C nicht überschritten werden.

Das vom Wasser im Wesentlichen befreite Granulat wird anschließend direkt in einen DAH-Behälter **2** gegeben. Im günstigsten Fall fällt das Granulat aus der Zentrifuge nur aufgrund der Schwerkraft direkt in den DAH-Behälter. Abhängig von seiner Temperatur weist das Granulat nach der Zentrifuge noch einen Wassergehalt von 200 bis 2000 ppm auf. In Figur 1 ist die Zentrifuge nicht separat dargestellt, da sie bei der Verwendung des Unterwassergranulators zwingend notwendig ist.

Um eine kontrollierte kontinuierliche Zuführung zu erreichen, kann ein Dosierorgan **3** zwischen Zentrifuge und DAH-Behälter **2** geschaltet sein. Das Dosierorgan **3** muss so gestaltet sein, dass das Granulat nicht wesentlich abgekühlt wird und dass das Ausströmen von Spülluft über die Granulatzuführung verhindert wird. Es kann beispielsweise thermisch gegenüber der Umgebung isoliert und/oder beheizt sein. Dieses Dosierorgan **3** ist bevorzugt eine Zellenradschleuse. Alternativ können beispielsweise Schieber und/oder Doppelpendelklappen verwendet werden, die das Granulat im Austrag des Granulators kurz anstauen und in regelmäßigen Zeitintervallen öffnen, um das Granulat in den DAH-Behälter **2** fallen zu lassen.

Der DAH-Behälter **2** ist bevorzugt ein stehender zylindrischer Behälter mit einem Einlass **4** für das Granulat an der Oberseite und einem Auslass **5** für das dealdehydisierte Granulat an der Unterseite. Die Unterseite ist bevorzugt als konischer Boden **6** ausgeführt, um einen gleichmäßigen Produktstrom zu gewährleisten. Der DAH-Behälter kann statische Einbauten zur Erhöhung seiner mechanischen Stabilität, zum Abstützen des statischen Drucks der Granulatsäule, zur Vergleichmäßigung des Produktstroms und/oder zur Einleitung der Spülluft aufweisen. Weiterhin kann er Rührorgane zum Bewegen des Granulates enthalten. Im unteren Bereich kann der DAH-Behälter Einrichtungen, beispielsweise Kühlrohre, Kühlplatten oder ähnliches, zur Kühlung des Granulats aufweisen.

Weiterhin enthält der DAH-Behälter mindestens eine Spülgaseinlassöffnung **7** und mindestens eine Spülgasauslassöffnung **8**, die so angeordnet sind, dass das zur Dealdehydisierung erforderliche Spülgas im Gleichstrom oder Gegenstrom zum Granulat durch den DAH-Behälter geleitet werden kann. Bevorzugt und wie in Figur 1 dargestellt befindet sich dieser Gaseinlass bereits im konischen Boden, um eine möglichst lange Kontaktzeit zwischen Granulat **100** und Spülgas **200** zu erreichen. Bei Einsatz eines internen Granulatkühlers befindet sich der Spülgaseinlass oberhalb des Granulatkühlers. Falls mehrere Einlassöffnungen vorhanden sind, können diese beispielsweise ringförmig angeordnet sein, um eine gleichmäßige Verteilung des Gases zu gewährleisten.

Um eine gleichmäßige Temperaturverteilung im DAH-Behälter sicherzustellen, können Spülgaseinlassöffnungen **7** auch in mehreren Ebenen im DAH-Behälter angeordnet sein. Beispielsweise kann eine erste Anzahl von Einlassöffnungen **7** wie in Figur 1 dargestellt bereits im konischen Boden ringförmig angeordnet sein, während eine zweite Anzahl von Einlassöffnungen (in Figur 1 nicht dargestellt) auf halber Strecke zwischen Granulateinlass und Granulatauslass ebenfalls ringförmig angeordnet ist. Bevorzugt sind die Spülgaseinlassöffnungen in mindestens zwei Ebenen angeordnet. Maximal fünf Ebenen können sich als sinnvoll erweisen. Das Spülgas kann den DAH-Behälter an seiner Oberseite durch einen separaten Gasauslass **8** verlassen.

Es kann sich als sinnvoll erweisen, das Spülgas im Gleichstrom statt im Gegenstrom zum Granulat durch den DAH-Behälter zu leiten. In diesem Fall muss der mindestens eine Spülgaseinlass an der Oberseite und der mindestens eine Spülgasauslass an der Unterseite des DAH-Behälters angeordnet sein. Auch hier ist eine Anordnung in mehreren Ebenen möglich.

Der DAH-Behälter sollte so ausgelegt sein, dass die Verweilzeit des Granulates in seinem Dealdehydisierungsteil zwischen 3 und 20 Stunden, bevorzugt zwischen 8 und 14 Stunden und besonders bevorzugt zwischen 10 und 14 Stunden beträgt.

Der DAH-Behälter kann eine Temperierungseinrichtung, beispielsweise einen Doppelmantel, aufweisen, mit der dem Reaktorinhalt Wärme zu- oder abgeführt werden kann.

Der DAH-Behälter besitzt weiterhin eine Füllstandsmessung **9**. Am Granulataustritt befindet sich eine Zellenradschleuse **10** mit Antriebseinheit **11** zum Austragen des dealdehydisierten Granulates. Der Füllstand des DAH-Behälters wird mit Hilfe der Austragszellenradschleuse **10** mit Antriebseinheit **11** gesteuert.

Falls keine interne Kühlung im DAH-Behälter vorgesehen ist, fällt das Granulat im Anschluss an die Austragszellenradschleuse **10** in einen Granulatkühler **12** und von dort in ein Silo oder direkt in einen Sack oder Big Bag.

Als Spülgas kann jedes für diesen Zweck bekannte Gas, beispielsweise Stickstoff oder getrocknete Luft eingesetzt werden. Aus wirtschaftlichen Gründen wird jedoch bevorzugt Luft eingesetzt, die aus der Atmosphäre entnommen werden kann. Diese wird vor Eintritt in den DAH-Behälter soweit getrocknet, dass sie einen Taupunkt kleiner als 30°C, bevorzugt kleiner als -15°C und besonders bevorzugt kleiner als -20°C aufweist. Die Trocknung erfolgt bevorzugt nach allgemein bekannten Methoden, zum Beispiel mit Molekularsieb oder auch anderen geeigneten Absorbentien.

Über den in der Trocknung eingestellten Taupunkt, d. h. Wassergehalt des Spülgases kann der im erfindungsgemäßen Verfahren auftretende Anstieg oder Abfall der intrinsischen Viskosität beeinflusst werden. Einzelheiten hierzu sind in der DE 102004010680 A1 beschrieben.

Das Luft-Chip-Verhältnis beträgt bevorzugt 4:1 bis 0,1:1 (m:m); das bedeutet, dass in einer Zeiteinheit pro 1 kg Granulat, das in den Behälter **2** eintritt, zwischen 4 und 0,1 kg Luft zugeführt werden. Besonders bevorzugt ist der Bereich von 1:1 bis 0,3:1 (m:m). Größere Luftmengen erfordern unnötig große Gebläse, Rohre, Trocknungseinrichtungen und ähnliche Vorrichtungen sowie unnötig großen Energieeinsatz und sind daher nicht wirtschaftlich.

Die verwendete Luft kann teilweise oder vollständig im Kreislauf geführt werden. In diesem Fall muss die bereits gebrauchte Luft vor erneutem Eintritt in den Behälter **2** aufbereitet werden. Dabei werden Acetaldehyd und überschüssiges Wasser mittels Adsorption an Molekularsieb oder ähnlichen, dem Fachmann bekannten Substanzen und Verfahren entfernt. Acetaldehyd zerfällt bei den erfindungsgemäß angewendeten Gastemperaturen weitgehend in Wasser und Kohlendioxid.

Das Spülgas wird vor dem Eintritt in den DAH-Behälter auf eine definierte Temperatur, die zwischen 180 und 200°C liegen kann, erwärmt. Außerhalb dieses Temperaturbereichs ist eine wirtschaftlich vorteilhafte Durchführung des erfindungsgemäßen Verfahrens nicht mehr möglich.

Die Produkttemperatur des Granulates im DAH-Behälter soll zwischen 170 und 195°C liegen. Für eine wirtschaftlich zu betreibende Dealdehydisierung sollten die Eintrittstemperatur des Spülgases und die Eintrittstemperatur des Granulates beim Eintritt in den DAH-Behälter eine möglichst geringe Differenz haben. Die Differenz ($T_{S,E}$ - $T_{G,E}$) zwischen Granulateintrittstemperatur $T_{G,E}$ und Eintrittstemperatur $T_{S,E}$ der Spülluft sollte zwischen -10 und + 40 K, bevorzugt zwischen 0 und 30 K betragen.

Dies ist möglich, da das Granulat bereits mit der beschriebenen hohen Temperatur aus der Zentrifuge in den DAH-Behälter **2** eintritt. Im DAH-Behälter findet neben der Dealdehydisierung, für die Energie aufgewendet werden muss, gleichzeitig eine Kristallisation der Polyesterketten im Granulat statt, durch die ein Verkleben des Granulates verhindert wird. Diese Kristallisation setzt Wärmeenergie frei. Überraschenderweise wurde festgestellt, dass diese Vorgänge sich bei den genannten Verfahrensbedingungen so überlagern, dass erheblich weniger zusätzliche Wärmeenergie über das Spülgas zugeführt werden muss.

Ebenfalls überraschend wurde festgestellt, dass das Granulat trotz seiner hohen Temperatur beim Eintritt in den DAH-Behälter nicht verklebt, obwohl es beim Eintritt in den DAH-Behälter noch einen vergleichsweise niedrigen Kristallisationsgrad aufweist. Auch beim Austritt aus dem DAH-Behälter enthält das dealdehydisierte Granulat keine Verklebungen, obwohl es an dieser Stelle einen im Vergleich zum bekannten Stand der Technik niedrigen Kristallisationsgrad aufweist.

Ein besonderer Vorteil der vorliegenden Erfindung ist somit, dass auf übliche Kristallisationsstufen bei der Herstellung des Polyestergranulats verzichtet werden kann, wodurch sich die gesamte Verfahrenszeit deutlich verkürzt und der apparative Aufwand deutlich vereinfacht wird.

Da das heiße Spülgas von unten nach oben durch die gesamte Granulatschüttung strömt, trocknet es zusätzlich das in der obersten Schicht im Behälter **2** befindliche Granulat, das nach dem Abzentrifugieren noch einen Wassergehalt von bis zu 2000 ppm aufweist. Während der Dealdehydisierung wird die Trocknung des Granulates bis auf Werte um 30 ppm Wassergehalt fortgesetzt.

Das mit dem erfindungsgemäßen Verfahren erzeugte Polyestergranulat weist für die weitere Verwendung sehr günstige Eigenschaften auf. Aufgrund der beschriebenen Verfahrensführung verändert sich die intrinsische Viskosität (I.V.) des Polyesters zwischen dem Eintritt in die Zerteilungseinrichtung in Schritt a. und dem Austritt aus dem Dealdehydisierungsbehälter in Schritt d. nur wenig, gesteuert in Abhängigkeit von der Produkttemperatur, der Verweilzeit, dem Taupunkt und der Temperatur des Spülgases sowie der Größe der Chips. Bei optimaler Einstellung im DAH-Behälter ist die Eingangs-I.V. gleich der Ausgangs-I.V.. Bei Bedarf kann jedoch im DAH-Behälter über den Taupunkt des Spülgases die I.V. angehoben oder abgesenkt werden.

Durch das erfindungsgemäße Verfahren wird ein Acetaldehydgehalt von < 1 ppm erreicht, so dass das Granulat problemlos beispielsweise zur Herstellung von Lebensmittelverpackungen eingesetzt werden kann. Überraschenderweise kann das Granulat in den hierbei verwendeten Formgebungseinrichtungen, beispielsweise Spritzgießmaschinen zur Herstellung von Flaschenpreforms, bei vergleichsweise niedrigen Temperaturen von maximal 275°C, vorzugsweise sogar maximal 255°C verarbeitet werden. Die Untergrenze der Verarbeitbarkeit liegt erfahrungsgemäß bei etwa 250°C. Diese niedrigen Temperaturen in Verbindung mit den Bedingungen des erfindungsgemäßen Verfahrens haben zur Folge, dass der Polyester im Verlauf der weiteren Verwendung nur maximal 0 bis 2 ppm Acetaldehydreformation (neu gebildeter Acetaldehyd) aufweist. Es ist daher sogar möglich, mit erfindungsgemäß hergestelltem Granulat mit einem höheren AA-Gehalt, z. B. bis 3 ppm, in die Preformherstellung zu gehen und so ein Preform herzustellen, der nicht mehr als 3 ppm AA aufweist.

Die so hergestellten Granulate haben eine sehr einheitliche Kern-Mantel-Struktur. Die Spärolithe sind groß und durchgängig über den Querschnitt des Granulats verteilt. Es gibt keine wesentlichen I.V.-Unterschiede über den Querschnitt und keine feste Mantel-struktur im Vergleich zu Standard-SSP-Chips, die nach dem traditionellen Verfahren hergestellt wurden.

Der Kristallisationsgrad in den Chips untereinander ist sehr gleichmäßig und liegt beim Ausgang aus dem DAH-Behälter unter 52%, bevorzugt unter 48 %, die HOF (Heat of Fusion) als Maß für die zum Aufschmelzen der Chips notwendige aufzubringende Energie liegt unter 50 kJ/kg.

Die wichtigsten Merkmale des nach dem erfindungsgemäßen Verfahren hergestellten Polyestergranulates lassen sich also folgendermaßen zusammenfassen:

- Das erfindungsgemäße Polyestergranulat mit einem Kristallisationsgrad < 52%, bevorzugt < 48 % und einer Heat of Fusion (HOF) < 50 kJ/kg kann bei einer Barreltemperatur von maximal 275°C, bevorzugt maximal 255°C und minimal etwa 250°C, zu Flaschenpreforms weiterverarbeitet werden.

- Das erfindungsgemäße Polyestergranulat mit einem Kristallisationsgrad < 52%, bevorzugt < 48 % und einer Heat of Fusion (HOF) < 50 kJ/kg weist bei der Weiterverarbeitung zu Flaschenpreforms mit einer Barreltemperatur von maximal 275°C und minimal etwa 250°C eine Acetaldehydreformation von 0 bis 8 ppm, bevorzugt maximal 0 bis 2 ppm auf.

- Das erfindungsgemäße Polyestergranulat zeigt unabhängig vom Kristallisationsgrad keine Verklebung.

**Beispiele**

Die Erfindung wird nunmehr anhand einiger, in keiner Weise die Erfindung beschränkender Ausführungsbeispiele näher beschrieben. Die angegebenen Eigenschaftswerte wurden hierbei wie folgt ermittelt:

Die Intrinsic-Viskosität (I.V.) wurde bei 25 °C an einer Lösung von 500 mg Polyester in 100 ml eines Gemisches aus Phenol und 1 2-Dichlorbenzol (3:2 Gew.-Teile) gemessen.

Die Messung der Farbwerte L und b erfolgte nach HUNTER. Die Polyesterchips wurden zunächst im Trockenschrank bei 135 $\pm$ 5 °C während einer Stunde kristallisiert. Die Farbwerte wurden danach ermittelt, indem in einem Dreibereichfarbmessgerät der Farbton der Polyesterprobe mit drei Fotozellen, denen je ein Rot-, Grün- und Blaufilter vorgeschaltet war, gemessen wurde (X-, Y- und Z-Werte): Die Auswertung erfolgte nach der Formel von HUNTER, wobei

$$L = 10 \sqrt{Y}$$

und

$$b = 7{,}0 \frac{}{\sqrt{Y}\,(Y - 0{,}8467\,Z)}$$

ist.

Der Acetaldehydgehalt (AA) wurde bestimmt, indem der Acetaldehyd durch Erhitzen in einem geschlossenen Gefäß aus dem Polyester ausgetrieben wurde und der Acetaldehyd im Gasraum des Gefäßes gaschromatographisch mit dem Head-space-Injektionssystem H540 von Perkin Eimer (Trägergas: Stickstoff; Säule: 1,5 m Edelstahl; Füllung: Poropack Q, 80 -100 mesh; Probemenge: 2g; Heiztemperatur: 150 °C. Heizdauer: 90 min) bestimmt wurde.

Zur Bestimmung des Kristallisationsgrades $\alpha$ (= KTG) wurde dreimal die Dichte $\rho$ von 30 Chips in einem Dichtegradienten mit einem Tetrachlorethan/Heptan-Gemisch bei 23 °C ermittelt und daraus $\alpha$ berechnet nach

$$\alpha = \frac{\rho_c\,(\rho - \rho_a)}{\rho\,(\rho_c - \rho_a)}$$

wobei

die Dichte von 100 % kristallinem PET:   $\rho_c$ = 1,455 und

(fortgesetzt)

die Dichte von amorphem PET:          pa = 1,332 ist.

Die Ermittlung der Schmelzenthalpie ("Heat of Fusion"; HOF) erfolgte in einem DSC-Gerät der Fa. Mettler entsprechend der ASTM E 793 der American Society for Testing of Materials mit einer Heizrate von 50 K min von 100 auf 200 °C, 5 min Halten auf dieser Temperatur und anschließend mit einer Heizrate von 10 K / min bis auf 300 °C; die verbrauchte Energie wurde in kJ/kg bestimmt.

Alle Beispiele wurden mit kugel- bis linsenförmigem Granulat mit einer durchschnittlichen Masse von 17 mg / Chip durchgeführt. Der Polyester aus dem letzten Schmelzepolykondensationsreaktor (DHI) hatte folgende Comonomerzusammensetzung: Comonomer: 2 Ma.-% Isophthalsäure (IPA); 1,4 Ma.-% Diethylenglykol (DEG). Der Katalysatorgehalt betrug 210 ppm Sb, der Cobaltanteil 10 ppm und der Stabilisatorgehalt lag bei 15 ppm P.

Die wichtigsten Ergebnisse aus den angeführten Beispielen werden in den nachfolgenden Tabellen 1 und 2 dargestellt.

Beispiel 1 (Vergleichsbeispiel)

Im Vergleichsbeispiel wurden amorphe Chips mit einer Standard-I.V. aus dem Schmelzepolykondensationsverfahren zur Herstellung von leicht modifiziertem PET für die Befüllung von Süßgetränken kristallisiert und festphasenpolykondensiert.

Dabei wurden in einem herkömmlichen Unterwassergranulator vom Typ AH 2000 der Fa. BKG Chips hergestellt, wobei die Temperatur des Wasserkreislaufs mittels Wasserkühlung auf ca. 80 °C eingestellt wurde. Der Druck im Wassersystem stellte sich auf atmosphärischen Druck in der Zentrifuge ein. Die Verweilzeit des Polyestermaterials im Wassergranulator betrug 44 Sekunden, die Temperatur der Chips am Austritt der Zentrifuge 70 bis 80 °C. Die Chips hatten die folgenden Eigenschaften:

I.V. = 0,61 dl/g; AA-Gehalt = 40 ppm, KTG = 8%. In einer ersten Kristallisationsstufe, einem Wirbelbettkristallisator mit einer Verweilzeit von 60 min und einer Temperatur von 200 °C wurden Chips mit folgenden Eigenschaften erhalten: I.V. = 0,62 dl/g; AA-Gehalt = 12,3 ppm; KTG = 46,1 %. In einer zweiten Kristallisationsstufe, einem Schachtkristallisator mit einer Verweilzeit von 180 min und einer Temperatur von 215 °C wurden folgende Qualitäten erhalten: I.V. = 0,63 dl/g; AA-Gehalt = 8,3 ppm; KTG = 53,1 %. Diese Chips wurden anschließend in einem Standard-SSP-Reaktor gefördert und dort bei einer Temperatur von 207,5 °C während einer Verweilzeit von 12 Stunden festphasenpolykondensiert. In allen drei Stufen wurde Stickstoff mit einem Taupunkt (Tp) von - 50 °C als Trägergas eingesetzt. Das Gas: Chip-Verhältnis (m:m) betrug 1:1.

In Beispiels 1 wird also nach der Unterwassergranulierung eine zweistufige Kristallisationsbehandlung durchgeführt, eine Behandlung, die erfindungsgemäß nicht notwendig ist.

Beispiel 2 (Vergleichsbeispiel)

Im Vergleichsbeispiele 2 wurden hochkondensierte Chips mit einer I.V. = 0,74 dl/g und einem AA-Gehalt = 51 ppm nach dem Latentwärmekristallisationsverfahren mit einem CrystallCut®-System von BKG einschließlich einer Vibrationsrinne granuliert und kristallisiert. Dabei wurde ein KTG von 41% erzeugt; die hierbei erhaltenden Chips wurden weiterverarbeitet. Folgende Parameter lagen im CrystallCut®-System vor: Wasserkreislauf ungekühlt, Wassertemperatur 90 bis 95 °C, Verweilzeit des Polyestermaterials im Wasser etwa 0,6 Stunden, Chiptemperatur am Austritt der Zentrifuge 150 bis 160 °C, Verweilzeit auf der Kristallisationsrinne 12 Minuten. Auf die beiden in Beispiel 1 verwendeten weiteren Kristallisationsstufen wurde verzichtet. Das aus der Kristallisationsrinne kommende 140°C warme Granulat wurde über eine geeignete Fördereinrichtung ohne Zwischenlagerung oder zwischenzeitliche Abkühlung direkt in einen DAH-Behälter gefördert (Spülgas Stickstoff mit Tp -30°C). Die Temperatur in der Festphasendealdehydisierungsstufe betrug 213 °C bei einer Verweilzeit von 6,7 Stunden.

Auch im Beispiel 2 wird nach der Granulierung eine Kristallisationsbehandlung durchgeführt, die, wie im Beispiel 2 beschrieben, sowohl zeitaufwendig ist, als auch einen deutlichen apparativen Aufwand bedeutet.

Beispiele 3, 4 und 6

Es wurde auf beide Kristallisationsstufen und auf eine Kristallisationsrinne, verwendet in Beispielen 1 und 2, verzichtet. Der Druck im Wassersystem des Granulators entsprach dem Atmosphärendruck in der Zentrifuge. Der Wasserkreislauf des Granulators war ungekühlt, die Wassertemperatur betrug 90 bis 95 °C, die Verweilzeit des Polyestermaterials im Wasser betrug 0,4 Sekunden. Der Ausgang der Trocknungseinrichtung (Zentrifuge) des Granulators wurde erfindungsgemäß direkt über dem DAH-Behälter installiert, um das teilkristalline, heiße Granulat mit Temperaturen von mindestens 175 °C direkt über eine Zellenradschleuse in den unmittelbar darunter befindlichen Behälter zu dosieren. Der KTG im Eintritt des DAH-Behälters war sehr unterschiedlich und schwankte zwischen 2 - 38 %, der AA-Gehalt lag bei 49 bis 53 ppm.

Der DAH-Behälter wurde mit heißer Luft von > 175 °C und mit einem Taupunkt (Tp) zwischen 0°C und -50°C und mit einem Gas:Chip-Verhältnis (m:m) von 4:1 bis 0,7:1 im Gegenstrom gefahren. Die heiße Spülluft wurde im konischen Teil des DAH-Behälters mittels eines ringförmigen Verteilers eingeblasen und verließ diesen wieder oberhalb des maximalen Füllstandes. Die Verweilzeit der Chips lag bei 12 bis 14 Stunden. Der Durchsatz lag bei 40 kg/h. Bei den kontinuierlich durchgeführten Versuchsreihen wurde festgestellt, dass sowohl in den kontinuierlich anfallenden Abluftströmen als auch in dem nach Versuchsende entleerten DAH-Behälter kein messbarer bzw. sichtbarer Staubanteil angefallen war.

### Beispiel 3

Chips mit einer Temperatur von 175 °C wurden über eine Zellenradschleuse direkt in den DAH-Behälter gefördert. Die im Gegenstrom geführte Spülluft hatte eine Temperatur von 200 °C und einen Taupunkt (Tp) von 0 °C. Das Gas:Chip-Verhältnis (m:m) war 4:1. Die Verweilzeit der Chips war 14 Stunden. Der AA-Anteil in der Abluft betrug 0,05 ppm bei 100%igem Austausch, d. h. ohne Kreislaufführung.

### Beispiel 4

Chips mit einer Temperatur von 190 °C wurden über eine Zellenradschleuse direkt in den DAH-Behälter gefördert. Die im Gegenstrom geführte Spülluft hatte eine Temperatur von 190°C und einen Taupunkt (Tp) von -50 °C. Das Gas:Chip-Verhältnis (m:m) war 0,7:1. Die Verweilzeit der Chips war 12 Stunden. Der AA-Anteil in der Abluft betrug 0,1 ppm bei 70%iger Ausschleusung, d. h. 30% der Luftmenge wurde erneut in den Kreislauf geleitet.

### Beispiel 5 (Vergleichsbeispiel)

Das zum Vergleich für das erfindungsgemäße Beispiel 6 herangezogene SSP-PET-Material wurde vom Markt bezogen, analysiert und in der Preformmaschine verarbeitet.

### Beispiel 6

Für die Versuch im Beispiel 6 wurde dem Granuliersystem eine PET-Schmelze mit einer I.V. von 0,77 dl/g zugeführt. Bei diesem Beispiel wurde auf die Dosiereinrichtung verzichtet und damit die sehr niedrig kristallisierten heißen Chips (KTG ca. 2 %) im freien Fall direkt in den DAH-Behälter eingebracht. Zur.Analyse wurden in diesem Versuch die Chips im Fallrohr entnommen und zum Einfrieren ihres aktuellen Zustandes sofort in flüssigem Stickstoff abgekühlt. Die mittlere Temperatur im DAH-Behälter lag bei 180°C.Die im Gegenstrom zugeführte Spülluft hatte eine Temperatur von 205°C und ihr Taupunkt lag bei -20°C. Das Gas-Chip-Verhältnis war 0,7:1 (m:m).

### Beispiel 7

Es wurde wie in Beispiel 6, also ohne Dosiereinrichtung, allerdings bei einem Gas-Chip-Verhältnis von 0,3:1 (m:m) gearbeitet. Der Taupunkt der Spülluft lag bei -28°C.

**Tabelle 1**

| | | Beispiel 1 | Beispiel 2 | Beispiel 3 | Beispiel 4 | Beispiel 5 | Beispiel 6 | Beispiel 7 |
|---|---|---|---|---|---|---|---|---|
| **Eingangsmaterial** | IV [dl/g] | 0,63 | 0,74 | 0,74 | 0,74 | - | 0,77 | 0,775 |
| | KTG [%] | 53 | 41 | 38 | 38 | - | 2 | 5 |
| | AA [ppm] | 8,3 | 51 | 53 | 53 | - | 49 | 47,5 |
| | Farbe b | -2,0 | -2,0 | -2,0 | -2,0 | - | -0,2 | 0 |
| **Weiterverarbeitungsbedingungen** | | Standard-SSP | FestphasenDAH mit $N_2$ | DAH mit Luft | DAH mit Luft | Standard-SSP | DAH mit Luft | DAH mit Luft |
| | VWZ [h] | 12 | 6,7 | 14 | 12 | - | 12 | 12 |
| | $T_{Prod}$ [°C] | 207 | 210 | 175 | 180 | - | 180 | 185 |
| | Gas | Stickstoff | Stickstoff | Luft | Luft | - | Luft | Luft |
| | $T_p$ [°C] | -50 | -30 | 0 | -50 | - | -20 | -28 |
| | Gas: Chip [m:m] | 0,7:1 | 1:1 | 4:1 | 0,7:1 | - | 0,7:1 | 0,3:1 |
| | $\Delta$ I.V. [dl/g] | 0,18 | 0,06 | 0 | 0,06 | - | 0,04 | 0,05 |
| **Endprodukt** | I.V [dl/g] | 0,80 | 0,80 | 0,74 | 0,80 | 0,81 | 0,81 | 0,825 |
| | AA [ppm] | 0,8 | 0,9 | 2,8 | 0,8 | 0,8 | 0,9 | 0,6 |
| | KTG [%] | 56 | 50 | 44 | 46 | 58 | 47 | 48 |
| | HOF [kJ/kg] | 59 | 52 | 39 | 40 | 59 | 42 | 44 |
| | Farbe b | -1,5 | -1,1 | -1,5 | -0,5 | -2 | +0,5 | +1,5 |

Die Verarbeitbarkeit der auf diese Weise erhaltenen Granulate wurde in einer Preformmaschine vom Typ Husky HL160 (2-Kavitätenwerkzeug, Preformgewicht 31 g für 1l - Flaschen) geprüft, wobei die geringstmögliche Temperatur der Aufschmelzeinheit, d. h. des Extruders ("Barreltemperatur"), als Beurteilungskriterium diente. Ein weiteres Kriterium ist die Zykluszeit, also die benötigte Gesamtzeit zur Herstellung eines Preforms im Kavitätenwerkzeug vom Ausstoßen eines Preforms bis zum Ausstoßen des nachfolgenden Preforms.

Das Material der Beispiele 3, 4, 6 und 7 konnte sowohl bei einer Barreltemperatur von 275°C als auch bei 255°C unproblematisch verarbeitet werden. Das im Beispiel 2 verwendete Granulat ließ sich zwar bei 255°C zu Preforms verarbeiten. Die Preforms waren jedoch im Bodenbereich nicht klar. Dagegen war die Verarbeitung des Granulates aus Beispiel 1 erst bei einer Barreltemperatur von 260°C möglich. Bei 255°C ließ sich das Granulat aus Beispiel 1 nicht schnell genug aufschmelzen. Die Verarbeitung des Granulates aus Beispiel 5 war sogar erst bei einer Barreltemperatur von 275°C möglich. Tabelle 2 zeigt die Verarbeitungsbedingungen und die zugehörigen Analysenergebnisse der aus diesen Verarbeitungsversuchen erhaltenen Preforms. Somit zeigen die Materialien der Vergleichsbeispiele keine so gute Eignung zur Verarbeitung zu Preform, wie die Materialien, erhalten in Übereinstimmung mit der vorliegenden Erfindung.

**Tabelle 2**

|  | Beispiel 1 | Beispiel 2 | Beispiel 3 | Beispiel 4 | Beispiel 5 | Beispiel 6 | Beispiel 7 |
|---|---|---|---|---|---|---|---|
| Barrel-T. [°C] | 255 | 255 | 255 | 255 | 255 | 255 | 265 |
| Zykluszeit [sec] | 12,5 | 12,5 | 12,5 | 12,5 | 15,0 | 15,0 | 15,0 |
| Δ AA [ppm] | n.m. | n.m. | 0,2 | 0,5 | n.m. | 1,4 | 1,3 |
| Δ I.V. [dl/g] | n.m. | n.m. | -0,010 | -0,015 | n.m. | -0,010 | -0,02 |
| Barrel-T. [°C] | 260 | 260 | - | - | - | - | - |
| Zykluszeit [sec] | 12,5 | 12,5 | - | - | - | - | - |
| Δ AA [ppm] | 1,4 | 0,6 | - | - | - | - | - |
| Δ I.V. [dl/g] | -0,02 | -0,015 | - | - | - | - | - |
| Barrel-T. [°C] | 275 | 275 | 275 | 275 | 275 | 275 | 275 |
| Zykluszeit [sec] | 12,5 | 12,5 | 12,5 | 12,5 | 15,0 | 15,0 | 15,0 |
| Δ AA [ppm] | 1,7 | 1,2 | 0,5 | 1,4 | 4,5 | 2,1 | 1,7 |
| Δ I.V. [dl/g] | -0,035 | -0,020 | -0,020 | -0,022 | -0,050 | -0,040 | -0,035 |
| n.m.=Verarbeitung nicht möglich Δ AA = Acetaldehydwiederbildung während Preformherstellung * = Verarbeitung möglich, aber Preforms trübe Δ I.V. = Viskositätsänderung während Preformherstellung | | | | | | | |

Im Beispiel 3 lag bei 255 °C Barreltemperatur in der Preformmaschine der AcetaldehydReformationswert mit +0,2 ppm nur unwesentlich über dem Eingangs-AA-Wert; der Viskositätsabbau lag mit einem Wert von -0,01 dl/g sehr niedrig. Mit der Anhebung der mittleren Produkttemperatur war der Dealdehydisierungseffekt deutlich besser. Gleichzeitig stieg bei der eingesetzten trockenen Luft die Viskosität spürbar an. Der Kristallisationsgrad und die HOF nahmen zu, lagen aber noch immer weit unter den Werten von Standardchips (siehe Beispiel 1). Die Absenkung des Gas-Chip-Verhältnisses hatte nur einen geringen Einfluss.

Die erfindungsgemäß hergestellten Chips aus dem Beispiel 6 ließen sich insgesamt gut verarbeiten. Der Acetaldehydreformationswert und der Viskositätsabbau während der Preformherstellung lagen insgesamt auf einem deutlich besseren Niveau als im Falle der herkömmlichen SSP-Chips im Beispiel 5.

Dies zeigt deutlich, dass das durch das erfindungsgemäße Verfahren herstellbare, leichter aufschmelzbare Granulat auch bei der Weiterverarbeitung entscheidende Vorteile hinsichtlich des Acetaldehydgehaltes im Preform aufweist: Durch die mögliche niedrigere Aufschmelztemperatur wird weniger Acetaldehyd im Preform gebildet. Gleichzeitig kann durch niedrigere Barreltemperaturen Energie in den Preformmaschinen eingespart werden. Von den aus diesen Preforms hergestellten 1l-Flaschen wurden die wichtigsten physikalischen Flaschenwerte gemessen. Diese entsprachen den Anforderungen des Marktes.

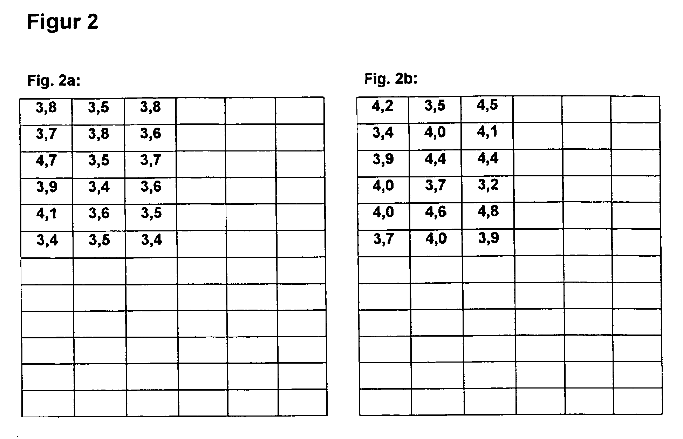

Die bessere Verarbeitbarkeit der erfindungsgemäß hergestellten Granulate zeigte sich auch bei Verarbeitungsversuchen mit einer kommerziellen Preformmaschine (Husky HyPET 300 P100/120 E140 mit 72-Kavitätenwerkzeug, Preformgewicht 26 g): Dabei wurden Granulate verarbeitet, die entsprechend den Beispielen 1 (Vergleich) bzw. 6 hergestellt worden waren. Es wurden die Acetaldehydgehalte aller Preforms aus dem linken oberen Quadranten des Werkzeugs, das insgesamt 72 Preform-Positionen aufwies, gemessen und in Fig. 2 in entsprechende Felder eingetragen. Die Zahl in jedem Feld entspricht dabei dem Acetaldehydgehalt in [ppm] des an dieser Position hergestellten Preforms. Es zeigt sich, dass bei der Verarbeitung des erfindungsgemäß hergestellten Granulats aus Beispiel 6 eine sowohl insgesamt niedrigere als auch einheitlichere Acetaldehydkonzentration im Preform festgestellt wurde (siehe Fig. 2a) als bei dem herkömmlich hergestellten Granulat aus.Vergleichsbeispiel 1 (Fig. 2b). Dies weist deutlich auf ein verbessertes, d. h. gleichmäßigeres Fließverhalten der Schmelze aus dem erfindungsgemäß hergestellten Granulat hin.

**Patentansprüche**

1. Verfahren zur Herstellung eines Granulates mit geringem Acetaldehydgehalt aus einer hochviskosen Polyesterschmelze mit einer I.V. zwischen 0,60 und 1,0 dl/g, **dadurch gekennzeichnet, dass**

   a) der Polyesterschmelzestrang unter Wasser bei einer Temperatur von mindestens 90 °C zerteilt wird,
   b) das begleitende Wasser unter möglichst geringer Abkühlung des Granulats vom Granulat getrennt wird, so dass das Granulat nach Abtrennung des Wassers eine Temperatur von mindestens 130 °C aufweist,
   c) das so erhaltene wasserarme Granulat nach der Wasserabtrennung in einen Dealdehydisierungsbehälter gegeben wird, und
   d) das Granulat im Dealdehydisierungsbehälter mittels eines Spülluftstroms mit einer Eintrittstemperatur zwischen 180 °C und 200 °C behandelt wird, wobei die Verweilzeit des Granulats im Dealdehydisierungsteil des Behälters 3 bis 20 Stunden beträgt; und wobei das Granulat in Schritt c) entweder direkt in den Dealdehydisierungsbehälter gegeben wird, oder mittels einer Dosiereinrichtung bevorzugt einer Zellenradschleuse, in den Dealdehydisierungsbehälter gegeben wird.

2. Verfahren gemäß Anspruch 1, wobei die Spülluft einen Taupunkt Tp von kleiner als 30 °C, bevorzugt kleiner als -15 °C und besonders bevorzugt kleiner als -20 °C aufweist.

3. Verfahren gemäß Anspruch 1, wobei das Luft-Granulat-Verhältnis im Dealdehydisierungsbehälter 4:1 bis 0,1:1, bevorzugt 0,7:1 bis 0,3:1 beträgt.

4. Verfahren gemäß Anspruch 1, wobei die Differenz zwischen Granulateintrittstemperatur und Eintrittstemperatur der Spülluft zwischen -10 und + 40 K, bevorzugt zwischen 0 und 30 K beträgt.

5. Verfahren gemäß Anspruch 1, wobei die Differenz zwischen der intrinsischen Viskosität (I.V.) des Polyesters zwischen dem Eintritt in die Zerteilungseinrichtung in Schritt a) und dem Austritt aus dem Dealdehydisierungsbehälter in Schritt d) maximal $\pm$ 0,10 dl/g beträgt.

6. Verfahren gemäß Anspruch 5, wobei die intrinsische Viskosität des Produktes durch die Einstellung des Taupunktes Tp der Spülluft und die Produkttemperatur eingestellt wird.

7. Verfahren nach einem der vorstehenden Ansprüche, wobei die Abtrennung des Wassers vom Granulat im Schritt b) durch Abschleudern erfolgt.

8. Verfahren nach einem der vorstehenden Ansprüche, wobei das Granulat im Schritt d) eine Temperatur von 170 bis 195 °C aufweist.

9. Vorrichtung zur Herstellung eines Granulats mit geringem Acetaldehydgehalt aus einer hochviskosen Polyesterschmelze, bestehend aus

   a) einem Unterwassergranulator,
   b) einer Zentrifuge,
   c) einem Dealdehydisierungsbehälter, der an der Oberseite mindestens eine Granulateinlassöffnung und an der Unterseite eine Granulatauslassöffnung sowie mindestens eine Spülgaseinlassöffnung und mindestens eine Spülgasauslassöffnung aufweist,

   **dadurch gekennzeichnet, dass** der Granulatauslass der Zentrifuge mit dem Granulateinlass des Dealdehydisierungsbehälters entweder nur durch eine passive Leitungseinrichtung oder eine passive Leitungseinrichtung in Kombination mit einer Dosiereinrichtung verbunden ist.

**10.** Vorrichtung gemäß Anspruch 9, wobei die Dosiereinrichtung eine Zellenradschleuse ist.

**11.** Vorrichtung gemäß Anspruch 9, wobei der Dealdehydisierungsbehälter Einbauten enthält.

**12.** Vorrichtung gemäß Anspruch 9, wobei der Dealdehydisierungsbehälter ein Rührorgan enthält.

**13.** Polyestergranulat, erhältlich nach einem Verfahren gemäß der Ansprüche 1 bis 8, mit einem Kristallisationsgrad < 52 %, bevorzugt < 48 % und einer Heat of Fusion (HOF) < 50 kJ/kg, **dadurch gekennzeichnet, dass** es bei einer Barreltemperatur von maximal 275 °C, bevorzugt maximal 255 °C, zu Flaschenpreforms weiterverarbeitet werden kann.

**14.** Polyestergranulat, erhältlich nach einem Verfahren gemäß der Ansprüche 1 bis 8, mit einem Kristallisationsgrad < 52 %, bevorzugt < 48 % und einer Heat of Fusion (HOF) < 50 kJ/kg, **dadurch gekennzeichnet, dass** es bei der Weiterverarbeitung zu Flaschenpreforms mit einer Barreltemperatur von maximal 275 °C eine Acetaldehyd-Reformation von maximal 0 bis 8 ppm, bevorzugt maximal 0 bis 2 ppm aufweist.

**15.** Polyestergranulat gemäß einem der Ansprüche 13 oder 14, wobei das Polyestergranulat kein Cyclohexandimethanol-Comonomer enthält.

**16.** Polyestergranulat gemäß einem der Ansprüche 13 bis 15, das unabhängig vom Kristallisationsgrad keine Verklebungen zeigt.

**Claims**

**1.** A method for producing a granulate with a low acetaldehyde content from a highly viscous polyester melt with an I.V. between 0.60 and 1.0 dl/g, **characterised in that**

a) the polyester melt strand is fragmented in the presence of water at a temperature of at least 90 °C,
b) the accompanying water is separated from the granulate with minimal cooling of the granulate so that the granulate has a temperature of at least 130 °C once the water has been extracted,
c) the granulate thus produced, which has a low water content, is transferred to a de-aldehydisation container once the water has been extracted, and
d) the granulate is treated in the de-aldehydisation container by means of a flow of flushing air having an intake temperature between 180°C and 200°C, wherein the residence time of the granulate in the de-aldehydisation part of the container is 3 to 20 hours; and wherein in step c) the granulate is transferred either directly to the de-aldehydisation container or is transferred into the de-aldehydisation container by means of a metering device, preferably a rotary vane feeder.

**2.** The method according to claim 1, wherein the flushing air has a dew point Tp of less than 30 °C, preferably less than -15 °C and more preferably less than -20 °C.

**3.** The method according to claim 1, wherein the air-granulate ratio in the de-aldehydisation container is 4:1 to 0.1:1, preferably 0.7:1 to 0.3:1.

**4.** The method according to claim 1, wherein the difference between the granulate intake temperature and the intake temperature of the flushing air is between -10 and +40 K, preferably between 0 and 30 K.

**5.** The method according to claim 1, wherein the difference in the intrinsic viscosity (I.V.) of the polyester between entry into the fragmentation means in step a) and exit from the de-aldehydisation container in step d) is $\pm$ 0.10 dl/g at most.

**6.** The method according to claim 5, wherein the intrinsic viscosity of the product is adjusted by adjusting the dew point Tp of the flushing air and the product temperature.

**7.** The method according to any one of the preceding claims, wherein the water is extracted from the granulate in step b) by centrifugation.

**8.** The method according to any one of the preceding claims, wherein the granulate has a temperature of 170 to 195 °C in step d).

**9.** A device for producing a granulate with a low acetaldehyde content from a highly viscous polyester melt, consisting of

a) an underwater granulator,
b) a centrifuge,
c) a de-aldehydisation container which has at least one granulate intake opening in the upper face and a granulate outlet opening in the underside as well as at least one flushing gas intake opening and at least one flushing gas outlet opening,

**characterised in that** the granulate outlet of the centrifuge is connected to the granulate intake of the de-aldehydisation container either merely by a passive line means or a passive line means in combination with a metering device.

**10.** The device according to claim 9, wherein the metering device is a rotary vane feeder.

**11.** The device according to claim 9, wherein the de-aldehydisation container contains built-in components.

**12.** The device according to claim 9, wherein the de-aldehydisation container contains a stirring member.

**13.** A polyester granulate, obtainable by a method according to claims 1 to 8, having a degree of crystallisation < 52 %, preferably < 48 % and a heat of fusion (HOF) < 50 kJ/kg, **characterised in that** it can be further processed to form bottle preforms at a barrel temperature of 275 °C at most, preferably 255 °C at most.

**14.** A polyester granulate, obtainable by a method according to claims 1 to 8, having a degree of crystallisation < 52 %, preferably < 48 % and a heat of fusion (HOF) < 50 kJ/kg, **characterised in that**, during further processing to form bottle preforms at a barrel temperature of 275 °C at most, it exhibits an acetaldehyde reformation of 0 to 8 ppm at most, preferably 0 to 2 ppm at most.

**15.** The polyester granulate according to either claim 13 or claim 14, wherein the polyester granulate does not contain any cyclohexanedimethanol comonomers.

**16.** The polyester granulate according to any one of claims 13 to 15 which demonstrates no conglutination, irrespective of the degree of crystallisation.

**Revendications**

**1.** Procédé de préparation de granulés ayant une faible teneur en acétaldéhyde, à partir d'un polyester en fusion hautement visqueux dont la viscosité intrinsèque est comprise entre 0,60 et 1,0 dl/g, **caractérisé en ce que**

a) l'on découpe l'extrudé de polyester en fusion sous l'eau, à une température supérieure ou égale à 90 °C,
b) l'on sépare l'eau des granulés qu'elle entoure, tout en veillant à ce que les granulés soient le moins possible refroidis, de façon à ce qu'après la séparation, les granulés présentent une température supérieure ou égale à 130 °C,
c) suite à la séparation de l'eau, on transfère les granulés à faible teneur en eau ainsi obtenus dans un récipient destiné à la suppression des aldéhydes, et au sein dudit récipient destiné à la suppression des aldéhydes, on traite les granulés au moyen d'un débit d'air de balayage, la température d'entrée étant comprise entre 180 °C et 200 °C, la durée de séjour des granulés dans la partie dudit récipient qui est destinée à la suppression des aldéhydes étant compris entre 3 et 20 heures ; et, dans l'étape c), les granulés étant soit introduits directement dans ledit récipient destiné à la suppression des aldéhydes soit introduits dans ledit récipient destiné à la suppression des aldéhydes au moyen d'un dispositif de dosage, s'agissant de préférence d'un sas rotatif alvéolaire.

**2.** Procédé selon la revendication 1, ledit air de balayage présentant un point de rosée Tp inférieur à 30 °C, de préférence inférieur à -15 °C et, avec une préférence particulière, inférieur à -20 °C.

**3.** Procédé selon la revendication 1, le rapport air/granulés au sein dudit récipient destiné à la suppression des aldéhydes étant compris entre 4:1 et 0,1:1, de préférence entre 0,7:1 et 0,3:1.

**4.** Procédé selon la revendication 1, la différence entre la température d'entrée des granulés et la température d'entrée de l'air de balayage étant comprise entre -10 et +40 K, de préférence entre 0 et 30 K.

**5.** Procédé selon la revendication 1, la différence que la viscosité intrinsèque dudit polyester subit entre l'entrée dans le dispositif de découpe à l'étape a) et la sortie du récipient destiné à la suppression des aldéhydes à l'étape d) ne dépassant pas $\pm$ 0,10 dl/g.

**6.** Procédé selon la revendication 5, la viscosité intrinsèque du produit étant ajustée en ajustant le point de rosée Tp de l'air de balayage et par la température du produit.

**7.** Procédé selon l'une des revendications précédentes, la séparation de l'eau des granulés à l'étape b) étant réalisée par essorage.

**8.** Procédé selon l'une des revendications précédentes, les granulés ayant à l'étape d) une température comprise entre 170 et 195 °C.

**9.** Dispositif de préparation de granulés ayant une faible teneur en acétaldéhyde à partir d'un polyester en fusion hautement visqueuc, constitué

    a) d'un dispositif de granulation sous l'eau,
    b) d'une centrifugeuse,
    c) d'un récipient destiné à la suppression des aldéhydes pourvu sur sa face supérieure d'au moins une entrée de granulés et sur sa face inférieure d'une sortie de granulés ainsi que d'au moins une entrée de gaz de balayage et d'au moins une sortie de gaz de balayage,

**caractérisé en ce que** la sortie de granulés de la centrifugeuse est reliée à la sortie de granulés du récipient destiné à la suppression des aldéhydes, soit par un conduit passif soit par un conduit passif en combinaison avec un dispositif de dosage.

**10.** Dispositif selon la revendication 9, ledit dispositif de dosage étant un sas rotatif alvéolaire.

**11.** Dispositif selon la revendication 9, ledit récipient destiné à la suppression des aldéhydes contenant des chicanes.

**12.** Dispositif selon la revendication 9, ledit récipient destiné à la suppression des aldéhydes contenant un organe d'agitation.

**13.** Granulés de polyester pouvant être obtenus selon un procédé conforme aux revendications 1 à 8, leur degré de cristallisation étant < 52 %, de préférence < 48 %, et leur chaleur de fusion étant < 50 kJ/kg, **caractérisé en ce qu'**ils peuvent être transformés, à une température de fourreau inférieure ou égale à 275 °C, de préférence inférieure ou égale à 255 °C, en préformes pour bouteilles.

**14.** Granulés de polyester pouvant être obtenus selon un procédé conforme aux revendications 1 à 8, leur degré de cristallisation étant < 52 %, de préférence < 48 %, et leur chaleur de fusion étant < 50 kJ/kg, **caractérisé en ce qu'**ils subissent, lors de leur transformation en préformes de bouteilles à une température de fourreau inférieure ou égale à 275 °C, une reformation d'acétaldéhyde comprise au maximum entre 0 et 8 ppm, de préférence au maximum entre 0 et 2 ppm.

**15.** Granulés de polyester selon l'une des revendications 13 ou 14, les granulés de polyester ne contenant pas de comonomère de type cyclohéxanediméthanol.

**16.** Granulés de polyester selon l'une des revendications 13 à 15, ne montrant pas d'agglutination quel que soit leur degré de cristallisation.

# Figur 1

## Figur 2

**Fig. 2a:**

| 3,8 | 3,5 | 3,8 | | | |
|-----|-----|-----|---|---|---|
| 3,7 | 3,8 | 3,6 | | | |
| 4,7 | 3,5 | 3,7 | | | |
| 3,9 | 3,4 | 3,6 | | | |
| 4,1 | 3,6 | 3,5 | | | |
| 3,4 | 3,5 | 3,4 | | | |
| | | | | | |
| | | | | | |
| | | | | | |
| | | | | | |
| | | | | | |
| | | | | | |

**Fig. 2b:**

| 4,2 | 3,5 | 4,5 | | | |
|-----|-----|-----|---|---|---|
| 3,4 | 4,0 | 4,1 | | | |
| 3,9 | 4,4 | 4,4 | | | |
| 4,0 | 3,7 | 3,2 | | | |
| 4,0 | 4,6 | 4,8 | | | |
| 3,7 | 4,0 | 3,9 | | | |
| | | | | | |
| | | | | | |
| | | | | | |
| | | | | | |
| | | | | | |
| | | | | | |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4230819 A
- US 4223128 A
- US 4064112 A
- US 4161578 A
- US 4370302 A
- WO 9417122 A
- JP 09249744 B
- US 5663290 A
- US 5573820 A
- EP 222714 A
- DE 19503053
- DE 19505680
- EP 0842210 A
- DE 4314162
- DE 3541500
- DE 19914116
- EP 0432427 A
- DE 3702841
- US 4436782 A
- WO 0181450 A
- WO 0105566 A
- DE 10349016 A1
- WO 2005044901 A1
- DE 102004015515 A1
- EP 0320586 A
- US 3617225 A
- DE 102004010680 A1